# EUROPEAN PATENT APPLICATION

(11) **EP 2 930 251 A1**
(43) Date of publication of application: **14.10.2015**
(21) Application number: 13863493.6
(22) Date of filing: 28.11.2013
(51) Int. Cl.: C22C 1/02, B22D 7/00, B22D 21/04, B22D 27/20, C22C 21/02, G01N 21/73

(54) **METHOD FOR PRODUCING SILICON-CONTAINING ALUMINUM ALLOY INGOT**

(30) Priority: 10.12.2012 JP 2012269240
(71) Applicant: Showa Denko K.K., Tokyo 105-8518 (JP)
(72) Inventor: FUKUDA Masashi, Kitakata-shi Fukushima 966-0845 (JP)
(74) Representative: Viering, Jentschura & Partner Patent- und Rechtsanwälte
(86) International application number: PCT/JP2013/082033
(87) International publication number: WO 2014/091936

(57) **Abstract**

Provided is a method of producing a silicon-containing aluminum ingot capable of preventing filter clogging that requires suspension of casting, suppressing aluminum loss, and reducing a content rate of phosphorus as an impurity in the obtained silicon-containing aluminum alloy ingot. The production method of the present invention includes a selection step for selecting, among a plurality of silicon masses 12 containing phosphorus as an impurity, silicon masses 12A which do not have visually peculiar parts formed by aggregation of phosphorus on the surface thereof using a selection means, a molten metal formation step for obtaining molten metal by introducing, into a melting furnace, an alloy material including at least an aluminum material and the silicon masses selected in the selection step and which do not have visually peculiar parts, and a casting step for obtaining a silicon-containing aluminum alloy ingot by casting the obtained molten metal.

## Description

### Technical Field

The present invention relates to a method of producing a silicon-containing aluminum alloy ingot containing less phosphorus as an impurity.

### Technical Background

A silicon mass used as a production raw material for a continuous cast rod, etc. , of a silicon-containing aluminum alloy contains phosphorus. It is considered that phosphorus as an impurity in such a silicon mass is brought in from silica of a raw material, or from carbon used for deoxidization, in the process of producing the silicon mass.

In a case of casting an ingot by adjusting an aluminum alloy molten metal using such a phosphorus-containing silicon mass as a part of the raw material and processing the ingot by rolling, etc., hole defects, etc., are generated due to phosphorus contained in the ingot. As a result, a desired strength cannot be obtained, and for example, when chemical processing is performed, uniform etching cannot be performed, resulting in a deterioration of product quality.

As a method of removing such phosphorus in an aluminum alloy, the following technologies are proposed. Patent Document 1 discloses that an aluminum alloy molten metal containing 5 ppm or more of phosphorus is subjected to a filtration treatment at a molten metal temperature of 750°C or lower to remove the phosphorus.

Further, Patent Document 2 describes that oxygen is added along with MgO to Al or Al alloy molten metal containing P as an impurity to form an oxide of the impurity P and/or a complex oxide of P and Mg, then the oxide and the complex oxide are separated to remove the phosphorus as an impurity.

Patent Document 3 describes that Mg is added to an aluminum molten metal containing P at a molten metal temperature of 650 to 850°C to form a compound of P and Mg, and also MgCl₂ is formed by injecting chlorine gas or chloride, and P in the molten metal is removed while making MgCl₂ absorb the compound of P and Mg to rise to the surface. Further, Patent Document 3 describes that Ca is added to an aluminum molten metal containing P at a molten metal temperature of 650 to 850°C to form a compound of P and Ca, and also CaCl₂ is formed by injecting chlorine gas or chloride, and P in the molten metal is removed while making CaCl₂ absorb the compound of P and Mg to rise to the surface.

### PRIOR ART DOCUMENTS

### PATENT DOCUMENTS

Patent Document 1: Japanese Unexamined Patent Application Publication No.4-276031
Patent Document 2: Japanese Unexamined Patent Application Publication No.7-207366
Patent Document 3: Japanese Patent Publication No.3524519

### SUMMARY OF THE INVENTION

### PROBLEMS TO BE SOLVED BY THE INVENTION

However, each of the technologies as described in the aforementioned Patent Documents 1 to 3 had the following problems. That is, in the technology of Patent Document 1, since minute aluminum phosphide particles are also mixed, there were problems that there were phosphorus that could not be removed since the minute particles passed through the filtration filter, and that the minute particles caused clogging of the filtration filter.

Further, in the technology of Patent Document 2, since oxygen is injected into the molten metal, there was a problem that an oxidation loss of the molten metal (aluminum loss) occurred.

Further, in the technology of Patent Document 3, since a large amount of chlorine gas or chloride was injected in the molten metal, the environmental load was great, and the removal rate of phosphorus was not sufficient.

The present invention was made in view of the aforementioned technical background, and aims to provide a method of producing a silicon-containing aluminum ingot capable of preventing an occurrence of filter clogging that requires suspension of casting, suppressing an aluminum loss, and also sufficiently reducing a content rate of phosphorus as an impurity in the obtained silicon-containing aluminum alloy ingot.

### MEANS TO SOLVE THE PROBLEMS

In a silicon ingot, etc., as a silicon mass, for example, in a stage of deoxidizing silica with carbon to form into an ingot, phosphorus exists as a phosphorus compound, etc. The inventor of the present invention found that the phosphorus as an impurity is distributed at a high concentration on a final solidified portion of the silicon ingot, etc., especially on the surface of the final solidified portion. As a result of diligent research based on such new knowledge, the inventor found that
by selecting crushed objects obtained by crushing a silicon ingot, etc., based on the existence or non-existence of the final solidified portion on the surface thereof, and introducing crushed objects not having the final solidified portions into the melting furnace as they are (first invention);
by introducing crushed objects having final solidified portions into a melting furnace after subjected to a water-rinsing treatment (second invention); or
by introducing both "crushed objects not having the final solidified portions" and "crushed objects having the final solidified portions and subjected to the water-rinsing treatment" into the melting furnace (third invention),
the content rate of phosphorus as an impurity in the obtained silicon-containing aluminum alloy ingot can be reduced, and completed the present invention. That is, to achieve the aforementioned objects, the present invention provides the following means. The "final solidified portion," as described later, has a peculiar characteristic in appearance such as not having a metallic luster, and therefore in this specification, in some cases, it is referred to as a "visually peculiar part."
(1) A method of producing a silicon-containing aluminum alloy ingot, comprising:
   a selection step for selecting, among a plurality of silicon masses containing phosphorus as an impurity, a silicon mass not recognized to have a visually peculiar part formed by aggregation of phosphorus on a surface thereof by using a selection means;
   a molten metal formation step for obtaining molten metal by introducing, into a melting furnace, an alloy material including at least an aluminum material and a silicon mass selected in the selection step and not having the visually peculiar part, and melting the alloy material; and
   a casting step for obtaining a silicon-containing aluminum alloy ingot by casting the obtained molten metal.
(2) A method of producing a silicon-containing aluminum alloy ingot, comprising:
   a selection step for selecting, among a plurality of silicon masses containing phosphorus as an impurity, a silicon mass recognized to have a visually peculiar part formed by aggregation of phosphorus on a surface thereof by using a selection means;
   a water-rinsing step for subjecting the silicon mass selected in the selection step and having the visually peculiar part to a water-rinsing treatment;
   a molten metal formation step for obtaining molten metal by introducing an alloy material including at least an aluminum material and the silicon mass obtained through the water-rinsing step into a melting furnace and melting the alloy material; and
   a casting step for obtaining a silicon-containing aluminum alloy ingot by casting the obtained molten metal.
(3) A method of producing a silicon-containing aluminum alloy ingot, comprising:
   a selection step for selecting, among a plurality of silicon masses containing phosphorus as an impurity, a silicon mass recognized to have a visually peculiar part formed by aggregation of phosphorus on a surface thereof by using a selection means;
   a water-rinsing step for subjecting the silicon mass selected in the selection step and having the visually peculiar part to a water-rinsing treatment;
   a molten metal formation step for obtaining molten metal by introducing an alloy material including an aluminum material, the silicon mass obtained through the water-rinsing step, and a silicon mass not selected in the selection step and not subjected to a water-rinsing treatment into a melting furnace; and
   a casting step for obtaining a silicon-containing aluminum alloy ingot by casting the obtained molten metal.
(4) The method of producing a silicon-containing aluminum alloy ingot as recited in any one of the aforementioned items 1 to 3, wherein a part of the silicon mass that the selection means recognizes as the visually peculiar part in the selection step is a part of a surface of the silicon mass not having a metallic luster, a granular concave-convex portion of a surface of the silicon mass, or a portion in which a color of a surface of the silicon mass is white, grayish white, or greenish gray.
(5) The method of producing a silicon-containing aluminum alloy ingot as recited in any one of the aforementioned items 1 to 4, wherein the selection means judges an existence or non-existence of the visually peculiar part in each silicon mass using an optical method and selects a silicon mass based on a judgment result.
(6) The method of producing a silicon-containing aluminum alloy ingot as recited in any one of the aforementioned items 1 to 4, wherein the selection means measures a reflection rate of a light reflected by the silicon mass when a light is irradiated on the silicon mass, and selects a silicon mass based on data of the reflection rate.
(7) The method of producing the silicon-containing aluminum alloy ingot as recited in any one of the aforementioned items 1 to 4, wherein the selection means measures a rate of absorption of a light absorbed by the silicon mass when a light is irradiated on the silicon mass, and selects a silicon mass based on data of the rate of absorption.
(8) The method of producing a silicon-containing aluminum alloy ingot as recited in any one of the aforementioned items 1 to 4, wherein the selection means judges an existence or non-existence of the visually peculiar part by human eyes and selects a silicon mass based on a judgment result.
(9) A method of producing a silicon-containing aluminum alloy ingot, comprising:
   a molten metal formation step for obtaining molten metal by introducing, into a melting furnace, an alloy material including at least an aluminum material and a silicon mass not having a visually peculiar part formed by aggregation of phosphorus on the surface thereof; and
   a casting step for obtaining a silicon-containing aluminum alloy ingot by casting the obtained molten metal.
(10) A method of producing a silicon-containing aluminum alloy ingot, comprising:
   a molten metal formation step for obtaining molten metal by introducing, into a melting furnace, an alloy material including at least an aluminum material and a silicon mass having a visually peculiar part formed by aggregation of phosphorus on a surface thereof and subjected to water-rinsing; and
   a casting step for obtaining a silicon-containing aluminum alloy ingot by casting the obtained molten metal.
(11) A method of producing a silicon-containing aluminum alloy ingot, comprising:
   a molten metal formation step for obtaining molten metal by introducing, into a melting furnace, an alloy material including at least an aluminum material, a silicon mass not having a visually peculiar part formed by aggregation of phosphorus on a surface thereof and a silicon mass having a visually peculiar part formed by aggregation of phosphorus on a surface thereof and subjected to water-rinsing; and
   a casting step for obtaining a silicon-containing aluminum alloy ingot by casting the obtained molten metal.
(12) The method of producing a silicon-containing aluminum alloy ingot as recited in any one of the aforementioned items 1 to 11, wherein a content rate of phosphorus in the silicon-containing aluminum alloy ingot obtained by the casting process is 5 ppm or less.
(13) A selection device, comprising:
   a conveyance means for conveying a silicon mass,
   a judgment means for judging an existence or non-existence of a visually peculiar part on a surface of the silicon mass which is being conveyed by the conveyance means; and
   a classification means for classifying a silicon mass judged to have a visually peculiar part by the judgment means and a silicon mass judged to not have a visually peculiar part by the judgment means.
(14) The selection device as recited in the aforementioned item 13, wherein the selection means judges a part of the silicon mass not having a metallic luster, a granular concave-convex part on a surface of the silicon mass, or a part whose color of a surface of the silicon mass is white, grayish white, or greenish gray, as the visually peculiar part.
(15) The selection device as recited in the aforementioned item 13 or 14, wherein the judgment means judges an existence or non-existence of the visually peculiar part on each silicon mass by an optical method.
(16) The selection device as recited in any one of the aforementioned items 13 to 15, wherein the judgment means has a configuration including a CCD camera.
(17) The selection device as recited in any one of the aforementioned items 13 to 16, wherein the classification means is arranged on a front side of the conveyance means in a conveyance direction, and, based on an instruction given by the judgment means based on a judgment result of each silicon mass in the judgment means, performs a horizontal movement moving closer to or farther from the conveyance means.

### EFFECTS OF THE INVENTION

In the invention as recited in the aforementioned item (1), among a plurality of silicon masses, a silicon mass recognized to not have a visually peculiar part formed by aggregation of phosphorus on a surface thereof is selected using a selection means, and the selected silicon mass not having the visually peculiar part (final solidified portion) is used as a silicon material. Therefore, a silicon-containing aluminum alloy ingot in which the content rate of phosphorus as an impurity is sufficiently reduced can be produced. Therefore, it is possible to suppress the content rate of phosphorus in the silicon-containing aluminum alloy ingot to 5 ppm or lower.

In comparison to a conventional technology using a method in which phosphorus existing in an aluminum alloy molten metal is separated and removed, phosphorus can be sufficiently removed. Further, since a silicon mass containing less phosphorus is selected by selection at a stage before introducing into a melting furnace (stage before becoming aluminum alloy molten metal), aluminum loss can be sufficiently suppressed.

In the invention as recited in the aforementioned item (2), among a plurality of silicon masses, a silicon mass recognized to have a visually peculiar part formed by aggregation of phosphorus on the surface thereof by using a selection means is selected, and the selected silicon mass (silicon mass having a visually peculiar part) subjected to a water-rinsing treatment is used as a silicon material. Therefore, phosphorus on the surface of the silicon mass (including phosphorus compound) can be sufficiently rinsed and removed with the water-rinsing treatment, and a silicon-containing aluminum alloy ingot in which the content rate of phosphorus as an impurity is sufficiently reduced can be produced. It becomes possible to suppress the content rate of phosphorus in the silicon-containing aluminum alloy ingot to 5 ppm or lower.

In comparison to a conventional technology using a method of separating and removing phosphorus existing in an aluminum alloy molten metal, phosphorus can be sufficiently removed. Since rinsing is done with water, the removing operation of phosphorus can be performed easily, and productivity can also be improved.

Further, it is a method in which a silicon mass is subjected to a water-rinsing treatment for rinsing and removing phosphorus at a stage before being introduced into a melting furnace (at the stage before becoming aluminum alloy molten metal), aluminum loss can be sufficiently suppressed.

In the invention as recited in the aforementioned item (3), as a silicon mass, since both the "silicon mass obtained through the water-rinsing step" and the "silicon mass not selected in the selection step and not subjected to the water-rinsing treatment" are employed, silicon materials are used without being wasted and a silicon-containing aluminum alloy ingot in which the content rate of phosphorus as an impurity is sufficiently reduced can be produced. It becomes possible to suppress the content rate of phosphorus in the silicon-containing aluminum alloy ingot to 5 ppm or lower.

In comparison to a conventional technology using a method of separating and removing phosphorus existing in an aluminum alloy molten metal, phosphorus can be sufficiently removed. Further, since rinsing is done with water, the removing operation of phosphorus can be performed easily, and productivity can also be improved.

Further, it is a method in which a silicon mass is subjected to a water-rinsing treatment for rinsing and removing phosphorus at a stage before being introduced into a melting furnace (at the stage before becoming aluminum alloy molten metal), aluminum loss can be sufficiently suppressed.

In the invention as recited in the aforementioned item (4), whether or not a visually peculiar part (final solidified portion) exists on a silicon mass can be determined with sufficient accuracy (reliability), which in turn can further reduce the content rate of phosphorus as an impurity.

In the invention as recited in the aforementioned item (5), since the existence or non-existence of a visually peculiar part is judged by an optical method, whether or not a visually peculiar part (final solidified portion) exists on a silicon mass can be determined with sufficient accuracy (reliability), which in turn can further reduce the content rate of phosphorus as an impurity.

In the invention as recited in the aforementioned items (6) and (7), whether or not a visually peculiar part (final solidified portion) exists on a silicon mass can be determined with even further sufficient accuracy (reliability).

In the invention as recited in the aforementioned item (8), since the existence or non-existence of a visually peculiar part can be judged by human eyes, whether or not a visually peculiar part (final solidified portion) exists on a silicon mass can be determined with sufficient accuracy (reliability) with an easier method.

In the invention as recited in the aforementioned item (9), since a silicon mass not having a visually peculiar part (final solidified portion) formed by aggregation of phosphorus on the surface thereof is used as a silicon material, a silicon-containing aluminum alloy ingot in which the content rate of phosphorus as an impurity is sufficiently reduced can be produced. It becomes possible to suppress the content rate of phosphorus in the silicon-containing aluminum alloy ingot to 5 ppm or lower. Further, aluminum loss can be sufficiently suppressed and filter clogging that requires suspension of casting can be prevented, which in turn can further improve the productivity.

In the invention as recited in the aforementioned item (10), a silicon mass having a visually peculiar part formed by aggregation of phosphorus on the surface thereof and subjected to water-rinsing is used as silicon materials, and therefore a silicon-containing aluminum alloy ingot in which the content rate of phosphorus as an impurity is sufficiently reduced can be produced. It becomes possible to suppress the content rate of phosphorus in the silicon-containing aluminum alloy ingot to 5 ppm or lower. Further, aluminum loss can be sufficiently suppressed and filter clogging that requires suspension of casting can be prevented, which in turn can further improve the productivity.

In the invention as recited in the aforementioned item (11), since a silicon mass not having a visually peculiar part formed by aggregation of phosphorus on the surface thereof, and a silicon mass having a visually peculiar part formed by aggregation of phosphorus on the surface thereof and subjected to water-rinsing are used as a silicon material, silicon-containing aluminum alloy ingot in which the content rate of phosphorus as an impurity is sufficiently reduced can be produced. It becomes possible to suppress the content rate of phosphorus in the silicon-containing aluminum alloy ingot to 5 ppm or lower. Further, aluminum loss can be sufficiently suppressed and filter clogging that requires suspension of casting can be prevented, which in turn can further improve the productivity.

In the invention as recited in the aforementioned item (12), a silicon-containing aluminum alloy ingot in which the content rate of phosphorus is 5 ppm or lower can be produced.

In the invention as recited in the aforementioned item (13), whether or not a visually peculiar part (final solidified portion) exists on a silicon mass can be continuously and accurately classified.

In the invention as recited in the aforementioned item (14), whether or not a visually peculiar part (final solidified portion) exists on a silicon mass can be judged with sufficient accuracy (reliability).

In the invention as recited in the aforementioned item (15), since the existence or non-existence of a visually peculiar part can be judged by an optical method, whether or not a visually peculiar part (final solidified portion) exists on a silicon mass can be judged with sufficient accuracy (reliability), and the judging speed is also fast.

In the invention as recited in the aforementioned item (16), since the judgment means has a configuration including a CCD camera, for example, by binarizing and judging a photograph image photographed with a CCD camera, whether or not a visually peculiar part (final solidified portion) exists can be judged with high accuracy, and the judging speed is also fast.

In the invention as recited in the aforementioned item (17), the classification means is arranged on a front side of the conveyance means in a conveyance direction, and performs a horizontal movement moving closer to or farther from the conveyance means based on an instruction given by the judgment means based on the judgment result of each silicon mass by the judgment means, so even in a case in which each silicon mass is continuously conveyed by the conveyance means, the "silicon mass not having a visually peculiar part" and the "silicon mass having a visually peculiar part" can be classified with high accuracy by the classification means.

### BRIEF DESCRIPTION OF THE DRAWINGS

Fig. 1 is a schematic drawing showing a portion of a process of an embodiment of a first production method according to the present invention.
Fig. 2 is a schematic drawing showing a portion of a process of an embodiment of a second production method according to the present invention.
Fig. 3 is a schematic drawing showing a portion of a process of an embodiment of a third production method according to the present invention.
Fig. 4 is a crushed object exterior photograph showing an example of a crushed object having a visually peculiar part (part not having a metallic luster).
Fig. 5 is a crushed object exterior photograph showing an example of a crushed object not having a visually peculiar part (entire surface has a metallic luster).
Fig. 6 is a schematic side view showing an embodiment of a selection device.

### EMBODIMENTS FOR CARRYING OUT THE INVENTION

Hereinafter, an example of a production method of a silicon-containing aluminum alloy ingot according to the present invention will be explained in detail.

In the present invention, a silicon mass (silicon mass containing phosphorus as an impurity) is used as a material. In a silicon ingot 11, etc., as a silicon mass, in a stage of deoxidizing silica with carbon to form an ingot, phosphorus exists as a phosphorus compound. As described above, the inventor of the present invention has found that the phosphorus as an impurity is distributed at a high concentration at the final solidified portion of the silicon ingot, especially on the surface of the final solidified portion. When a molten silicon is poured into a casting mold 10, the molten silicon is cooled and starts to solidify from the vicinity of the wall surface of the casting mold, and the top surface portion of the molten silicon at the opening of the top portion of the casting mold 10 solidifies last. The aforementioned final solidified portion refers to the solidified portion that solidifies last. For example, after 95% or more of the volume of the molten silicon in the casting mold is solidified, the portion in which the remaining molten silicon is finally solidified can be defined as the "final solidified portion" (upper surface solidified portion).

### [First Production Method]

The first production method of the present invention includes a crushing step, a selection step, a molten metal formation step, and a casting step.

In the crushing step, a silicon ingot (including phosphorus as an impurity) 11 is crushed to obtain a plurality of crushed objects 12. For example, the silicon ingot 11 is crushed using a crusher (cracking machine).

It is preferable that the size of the crushed object (including powder form) is 30 cm or less in average major axis length. Among them, it is preferable that the size of the crushed object is in a range of 1 cm to 30 cm in average major axis length. In addition, in such a case, powders produced at the time of crushing may be introduced into the melting furnace together with the crushed objects of 1 cm to 30 cm in the later molten metal formation step.

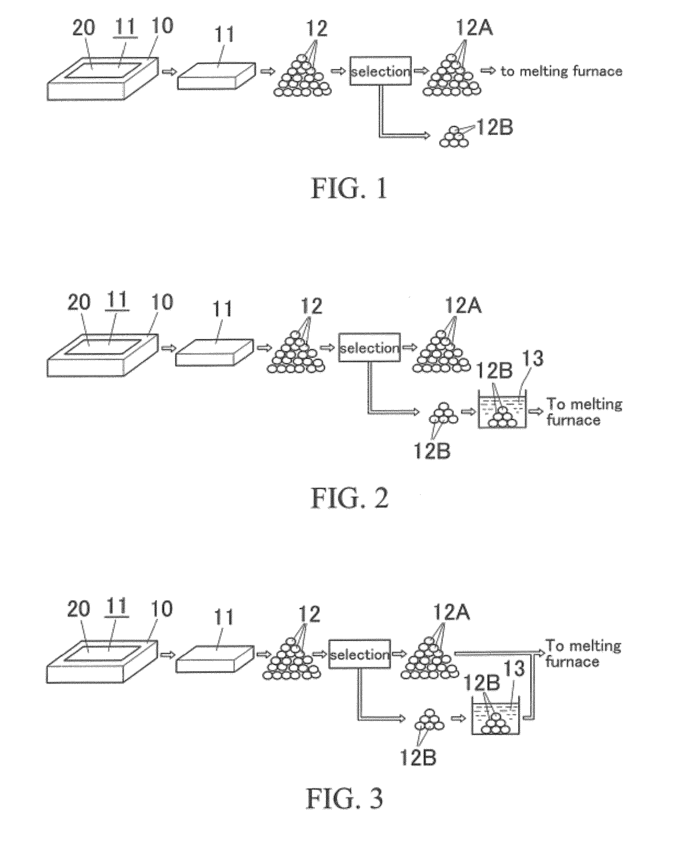

In the selection step, among a plurality of crushed objects (silicon masses) 12 obtained in the crushing step, a crushed object 12A in which a visually peculiar part 20 formed by aggregation of phosphorus is not recognized on the surface thereof is selected using a selection means (see Fig. 1).

In the molten metal formation step, an alloy material including at least an aluminum material and a silicon mass 12A selected in the selection step and not having a visually peculiar part is introduced into a melting furnace to be melted to thereby obtain a molten metal. The molten metal temperature for melting is typically in a range of 770°C to 870°C.

In the first production method, the crushed object 12 not having a visually peculiar part which was selected in the selection step is not subjected to a water-rinse treatment, and the crushed object 12A is introduced into a melting furnace as it is.

Although the aluminum material is not especially limited, for example, an aluminum ground metal, etc., can be exemplified.

As needed, other metal materials (copper, magnesium, etc.) other than the aforementioned two materials may be introduced into the melting furnace. Further, along with a "crushed object 12A selected in the selection step and not having a visually peculiar part", for example, a "crushed object 12 which has not been through the selection step" can be introduced into the melting furnace. But, needless to say, it is not desirable to introduce a crushed object which has not gone through such a selection step if possible in view of sufficiently obtaining an effect to reduce the content rate of phosphorus as an impurity.

In the casting step, by casting the molten metal obtained in the molten metal formation step, an ingot of an aluminum alloy containing silicon (silicon-containing aluminum alloy ingot) is obtained. By the aforementioned casting, the molten metal can be processed into an ingot of a silicon-containing aluminum alloy, or can be processed into a continuous cast rod of a silicon-containing aluminum alloy. The shape of an ingot obtained by casting is not especially limited.

Since the first production method is capable of sufficiently reducing the content rate of phosphorus as an impurity, for example, it is suitable as a production method of 2000 series, 5000 series, and 6000 series aluminum alloy ingot for plastic deformation processing (rolling process, extrusion process, forging process, etc.).

### [Second Production Method]

The second production method of the present invention includes a crushing step, a selection step, a water-rinsing step, a molten metal formation step, and a casting step.

In the crushing step, a silicon ingot (including phosphorus as an impurity) 11 is crushed to obtain a plurality of crushed objects 12. For example, the silicon ingot 11 is crushed using a crusher (cracking machine).

It is preferable that the size of the crushed object (including a powder form object) is 30 cm or less in average major axis length. Among them, it is preferable that the size of the crushed object is in a range of 1 cm to 30 cm in average major axis length. In addition, in such a case, a powder form object produced at the time of crushing may be introduced into the melting furnace together with the crushed objects of 1 cm to 30 cm in the later molten metal formation step.

In the selection step, among a plurality of crushed objects (silicon masses) 12 obtained in the crushing step, a crushed object 12B having a visually peculiar part 20 formed by aggregation of phosphorus on the surface thereof is selected using a selection means (see Fig. 2).

In the water-rinsing step, the "crushed object 12B having a visually peculiar part" selected in the selection step is subjected to a water-rinse treatment (see Fig. 2). Next, after removing the adhered water from the crushed object subjected to the water-rinsing treatment by drying, wiping, etc., the plurality of crushed objects is introduced into the melting furnace in the later molten metal formation step.

In the water-rinsing treatment, it is acceptable that at least a portion of the surface of the final solidified portion is rinsed with water, or that a portion not rinsed with water remains on the surface of the final solidified portion.

The water-rinsing treatment can be performed by immersing the crushed object 12B in water 13 (see Fig. 2), or water 13 can be sprayed on the crushed object 12B, and the method is not especially limited.

By performing a water-rinse treatment as described above, phosphorus (including phosphorus compound) which often superficially aggregates on a surface of a crushed object 12B can be sufficiently rinsed and removed.

It is preferable that the temperature of water for performing the water-rinsing treatment is 5°C to 90°C. By using water of 5°C to 90°C, the dissolution removability of phosphorus by water-rinsing can be further improved. In a case of accompanying a conveyance, a movement, etc., of the crushed object in a later step, it is preferable that the temperature of the water is 40°C to 60°C. By setting it to 40°C to 60°C, the safety of the operation can be improved.

In the molten metal formation step, an alloy material including at least an aluminum material and a crushed object obtained through the water-rinsing step is introduced into a melting furnace to be melted to thereby obtain a molten metal. The molten metal temperature for melting is typically in a range of 770°C to 870°C.

As the aluminum material, although it is not especially limited, for example, an aluminum ground metal, etc., can be exemplified.

As needed, other metal materials (copper, magnesium, etc.) other than the aforementioned two materials may be introduced into the melting furnace. Further, if it is in a range in which the effects of the present invention is not inhibited, along with the "crushed object obtained through the water-rinsing step", for example, a "crushed object 12 which has not gone through the selection step" is not excluded from being introduced into the melting furnace depending on the intended alloy specification, but for the alloy specification intended for sufficiently obtaining a impurity phosphorus content reduction effect, it is needless to say that it is not desirable to introduce a crushed object which has not been subjected to selection step if possible.

In the casting step, by subjecting the molten metal obtained in the molten metal formation step to casting, an ingot of an aluminum alloy containing silicon (silicon-containing aluminum alloy ingot) is obtained. By the aforementioned casting, the molten metal can be processed into an ingot of a silicon-containing aluminum alloy, or can be processed into a continuous cast rod of a silicon-containing aluminum alloy. The shape of an ingot obtained by casting is not especially limited.

In the second production method, since the content rate of phosphorus as an impurity can be sufficiently reduced, for example, it is suitable for a production method of a 4000 series aluminum alloy ingot for casting or die casting.

### [Third Production Method]

In this third production method, an alloy material including at least both a crushed object obtained in the middle of the second production method (crushed object selected in the selection step and not having a visually peculiar part) 12A and a crushed object obtained in the middle of the second production method (crushed object obtained through the water-rinsing step) 12B and an aluminum material are introduced into a melting furnace to be melted to thereby obtain a molten metal (see Fig. 3). Except that an alloy material including at least an aluminum material, the crushed object 12A and the crushed object 12B is introduced into a melting furnace, the other production methods, producing conditions, etc., are the same as those of the second production method, so the detailed explanations will be omitted. Except that an alloy material including at least an aluminum material, the crushed object 12A and the crushed object 12B is introduced into a melting furnace, the other production methods, by setting the producing conditions, etc., to be the same as those of the second production method, an aluminum alloy ingot including silicon (silicon-containing aluminum alloy ingot) is obtained.

Since the third production method is capable of sufficiently reducing the content rate of phosphorus as an impurity, for example, it is suitable for a production method of 4000 series aluminum alloy ingot for plastic deformation processing (roll processing, extrusion processing, forge processing, etc.).

Next, the selection step in the first to third production methods of the present invention will be explained in detail. In the selection step, as the part to be recognized as a visually peculiar part by the selection means, the followings are exemplified, but not especially limited to them:
1) a part of a surface of a crushed object not having a metallic luster;
2) a part of a surface of a crushed object in which the color is white, grayish white or greenish gray; and
3) a granular concave-convex part of a surface of a crushed object.

As to the abovementioned item 1), a selection means judges the existence or non-existence of a metallic luster part of the surface to select a plurality of crushed objects 12. In a plurality of crushed objects 12 obtained in the crushing step, a part having a metallic luster is a cleavage plane (not including the final solidification part) and the part not having this metallic luster is a final solidification part. The part having a metallic luster (cleavage plane) is high in reflection rate of light, and reflects 70% or more of the incident light irradiated (reflection rate of 70% or more). On the other hand, a part not having a metallic luster (final solidified portion) is low in reflection rate of light, and 40% or less of the incident light irradiated is reflected (reflection rate of 40% or less). Therefore, by irradiating a light (the light can be a natural light) onto a plurality of crushed objects 12, the existence or non-existence of a metallic luster part can be judged by looking at the reflected light with human eyes. Alternatively, the existence or non-existence of a metallic luster part can be judged by measuring the reflected light with a reflectometer. By judging the existence or non-existence of a metallic luster by such an optical method, a plurality of crushed objects 12 can be selected based on the judgment result. That is, it can be classified into a crushed object 12A having a metallic luster (not having a visually peculiar part) and a crushed object 12B having a part no having a metallic luster (visually peculiar part).

As to the abovementioned item 2), a selection means judges the color of the surface to select a plurality of crushed objects 12. The type of color of the surface of the crushed objects is classified into 8 types. As a result of performing an X-ray diffraction measurement on each type to identify the compounds, it was found that the color under the condition that a P compound is concentrated on a surface was white, grayish white, or greenish gray. Therefore, by irradiating a light (it can be a natural light) onto a plurality of crushed objects 12, the existence or non-existence of a visually peculiar part (final solidified portion) can be judged from the color recognized by looking at the reflected light with human eyes, and a plurality of crushed objects 12 can be selected based on the judgment result. That is, it can be classified into crushed objects 12A not having a white part, a grayish white part, or a greenish gray part (a visually peculiar part), and crushed objects 12B having a white part, a grayish white part, or a greenish gray part (a visually peculiar part).

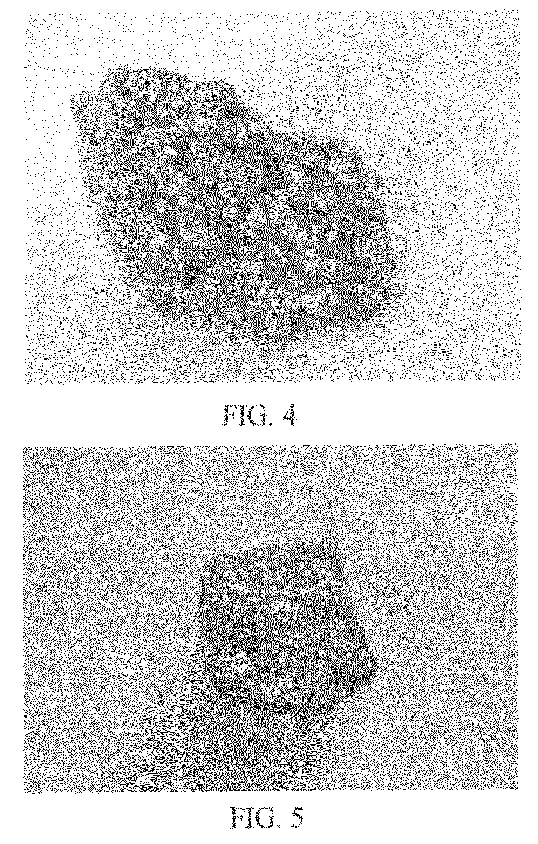

As to the abovementioned item 3), a selection means judges the form of the surface to select a plurality of crushed objects 12. As the form, for example, a granular concave-convex part (a part that can be seen in the photograph of Fig. 4), a cleavage plane (a part that can be seen in the photograph of Fig. 5), etc., can be exemplified. As a result of identifying the compound by the X-ray diffraction measurement, the white, grayish white or greenish gray portion found to be a part in which a P compound is aggregated on the surface has a peculiar surface form having granular concave-convex parts on the surface (see Fig. 4). Therefore, by judging the existence or non-existence of such granular concave-convex parts, a plurality of crushed objects 12 can be selected based on the judgment result. That is, it can be classified into crushed objects 12A not having a granular concave-convex part (visually peculiar part), and crushed objects 12B having a granular concave-convex part (visually peculiar part). Further, since a part having a metallic luster is a cleavage plane, focusing on the cleavage plane, it can be classified into crushed objects 12A not having a non-cleavage plane (visually peculiar part) and crushed objects 12B having a non-cleavage plane (visually peculiar part).

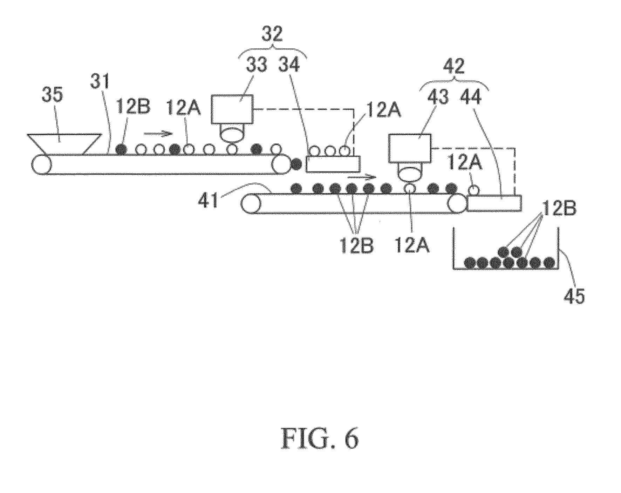

An embodiment of a selection device 30 used in the selection step is shown in Fig. 6. The selection device 30 is equipped with a first conveyance means 31 such as a belt conveyor, etc., a first judgment means (first examination means) 33 arranged on an upper surface side of a part of the first conveyance means 31 in a conveyance direction, a first classification means 34 arranged on a front side of the first conveyance means 31 in the conveyance direction, a second conveyance means 41, such as a belt conveyor, arranged so that a front end portion in the opposite direction opposite to the conveyance direction is arranged below the front end portion of the first conveyance means 31 in the conveyance direction, a second judgment means (second examination means) 43 arranged on an upper surface side of a part of the second conveyance means 41 in the conveyance direction, and a second classification means 44 arranged on the front side of the second conveyance means 41 in the conveyance direction.

The first conveyance means 31 conveys a crushed object 12 as an object for selection. In Fig. 6, the reference numeral "35" denotes a hopper functioning a supply port for supplying crushed objects 12 to the first conveyance means 31. The second conveyance means 41 receives and conveys the crushed objects 12B dropped from the first conveyance means 31.

The first judgment means 33 judges an existence or non-existence of a visually peculiar part (final solidification part) 20 on the crushed object 12 which is being conveyed by the first conveyance means 31. Similarly, the second judgment means 43 judges an existence or non-existence of a visually peculiar part (final solidification part) 20 on the crushed object 12 which is being conveyed by the second conveyance means 41. As the visually peculiar part, a part of a surface of a crushed object not having a metallic luster, a part of a surface of a crushed object having a granular concave-convex part, or a part of a surface of a crushed object whose color is white, grayish white, or greenish gray, is exemplified.

The classification means 34, based on an instruction given by the first judgment means 33 based on a judgment result of each crushed object in the first judgment means 33, performs a horizontal movement such as moving closer to or farther from the first conveyance means 31.

Similarly, the second classification means 44, based on an instruction given by the second judgment means 43 based on a judgment result of each crushed object in the second judgment means 43, performs a horizontal movement such as moving closer to or farther from the second conveyance means 41.

The first selection means 32 is constituted by the first judgment means 33 and the first classification means 34. Further, the second selection means 42 is constituted by the second judgment means 43 and the second classification means 44.

In this embodiment, the first judgment means 33 and the second judgment means 43 each has a configuration including a CCD camera. The first judgment means 33 photographs each crushed object 12 conveyed on the first conveyance means 31 one by one with the CCD camera and binarizes the photographed image. Further, the second judgment means 43 photographs each crushed object 12 conveyed on the second conveyance means 41 one by one with the CCD camera and binarizes the photographed image.

The banarization is performed for, for example, at least any one of the luster, the color, and the form of each crushed object 12. For example, as an example of the binarization, when a light is irradiated on a crushed object having a metallic cleavage plane and the reflected light is regarded as 100, the banalization of the image is performed such that the image is considered as "black" when the reflected light is less than 40 when a light is irradiated on each crushed object, and that the image is considered as "white" when the reflected light is 40 or more. Then, a crushed object 12A in which "black" did not exist in the binarized image is received by the first classification means 43 from the first conveyance means 31 by bringing the first classification means 34 closer to the first conveyance means 31. On the other hand, a crushed object 12B in which "black" exists in the binarized image is dropped on the second conveyance means 41 from the first conveyance means 31 by bringing the first classification means 34 farther from the first conveyance means 31 (dropped without being received by the first classification means 34).

Next, the crushed objects conveyed by the second conveyance means 41 go through a selection operation by the first selection means 32, and most of them are crushed objects 12B having a visually peculiar part. Similarly, crushed objects 12A in which "black" does not exist in the binarized image obtained by photographing by the second judgment means 43 are received by the second classification means 44 from the second conveyance means 41 by bringing the second classification means 44 closer to the second conveyance means 41. On the other hand, crushed objects 12B in which "black" exists in the binarized image are dropped in a classification container 45 from the second conveyance means 41 by bringing the second classification means 44 farther from the second conveyance means 41 (dropped without being received by the second classification means 44).

In this way, the crushed objects 12 (crushed objects consisting of crushed objects 12A not having a visually peculiar part and crushed objects 12B having a visually peculiar part) can be selected into "crushed objects 12A not having a visually peculiar part" received by the first and second classification means 34 and 44 and "crushed objects 12B having a visually peculiar part" received in the classification container 45 (see Fig. 6).

After performing a selection of such crushed objects, the steps after the selection step that are already explained as the first to third production methods of the present invention will be performed (see Figs. 1 to 3).

Further, in the selection device 30 shown in Fig. 6, to improve the reliability (accuracy) of the selection of crushed objects, the configuration in which two selection mechanism sections including a conveyance means, a judgment means, and a classification means is arranged in series is employed, but not especially limited to such a configuration. For example, a configuration equipped with one selection mechanism section including a conveyance means, a judgment means and a classification means can be employed. Alternatively, a configuration equipped with three selection mechanism sections including a conveyance means, a judgment means and a classification means are arranged in series can be employed.

Further, the selection device 30 shown in Fig. 6 merely shows an example of a selection means, and the selection step in the production method of the present invention is not especially limited to a step employing the selection device 30 shown in Fig. 6.

According to the production method of the present invention, it becomes possible to produce a silicon-containing aluminum alloy ingot in which the phosphorus content rate is 5 ppm or less (including 0 ppm) (see the later explained Embodiments 1 to 3).

The casting method is not especially limited, and for example, a semi-continuous casting method, a horizontal continuous casting method, a strip casting method, a gravity casting method, etc., can be exemplified, but any casting method may be used.

The production method of the present invention is for producing a silicon-containing aluminum alloy ingot (silicon-containing aluminum alloy cast product). Although the components other than Al and Si are not especially limited, as an aluminum alloy composition, 2000 series alloy, 3000 series alloy, 4000 series alloy, 5000 series alloy, and 6000 series alloy are suitable. Especially, in the case of alloy series containing a large amount of Si, for example, 4000 series alloy, it is preferable since the effects (effects of the present invention) are great.

### Examples

Next, specific examples of the present invention will be explained, but the present invention is not especially limited to these examples.

### <Example 1>

A silicon mass obtained by subjecting silica to a deoxidization treatment (phosphorus content rate 230 ppm) which was heated and melted was poured into a casting mold 10 and naturally cooled to obtain a rectangular shaped silicon ingot 11 (see Fig. 1). By this natural cooling, the solidification of the molten silicon progressed from the vicinity of the outer peripheral frame section of the casting mold and the solidification was completed on the upper exposed surface.

Next, as shown in Fig. 1, the rectangular shaped silicon ingot 11 was taken out from the casting mold 10 and the silicon ingot was crushed to obtain a plurality of crushed objects 12. The size of the crushed object was 10 cm in average major axis length. Then, by visual observation, the surfaces of these plurality of crushed objects are classified into crushed objects 12A in which parts not having a metallic luster (visually peculiar parts) do not exist (the entire surface has a metallic luster) and crushed objects 12B in which parts not having a metallic luster (visually peculiar parts) exist.

Next, the selected crushed objects 12A not having a visually peculiar part were introduced into a melting furnace, and an aluminum ground metal having an aluminum content rate of 99.7 mass%, a copper ground metal having a copper content rate of 99.9 mass%, and a magnesium ground metal having a magnesium content rate of 99. 9 mass% were introduced into the melting furnace and heated to 850°C to produce an aluminum alloy molten metal. Each of the aforementioned materials was introduced so that the silicon content rate became 11 mass%, the copper content rate became 4 mass%, the magnesium content rate became 0.5 mass%, and the aluminum content rate became 84.5 mass% in the aluminum alloy molten metal. Crushed objects 12B having a visually peculiar part were not introduced into the melting furnace.

By casting the aluminum alloy molten metal, a silicon-containing aluminum alloy ingot (silicon-containing aluminum alloy ingot) was obtained.

### <Example 2>

A silicon mass obtained by subjecting silica to a deoxidization treatment (phosphorus content rate was the same phosphorus content rate as the silicon mass used in Example 1) which was heated and melted was poured into a casting mold 10 and naturally cooled to obtain a rectangular shaped silicon ingot 11 (see Fig. 2).

Next, as shown in Fig. 2, the rectangular shaped silicon ingot 11 was taken out from the casting mold 10 and the silicon mass was crushed to obtain a plurality of crushed objects 12. The size of the crushed object was 10 cm in average major axis length. Then, by visual observation, the surfaces of these plurality of crushed objects are classified into crushed objects 12A in which parts not having a metallic luster (visually peculiar parts) do not exist (the entire surface has a metallic luster) and crushed objects 12B in which parts not having a metallic luster (visually peculiar parts) exist.

Thereafter, the selected plurality of crushed objects 12B was subjected to a water-rinsing treatment in which they were immersed in water 13 of 60°C for 30 minutes (see Fig. 2). Next, after removing the adhered water from the taken-out crushed objects by drying, these crushed objects were introduced into a melting furnace, and an aluminum ground metal having an aluminum content rate of 99.7 mass%, a copper ground metal having a copper content rate of 99.9 mass%, and a magnesium ground metal having a magnesium content rate of 99. 9 mass% were further introduced into the melting furnace and heated to 850°C to produce an aluminum alloy molten metal. Each of the aforementioned materials was introduced so that the silicon content rate became 11 mass%, the copper content rate became 4 mass%, the magnesium content rate became 0.5 mass%, and the aluminum content rate became 84.5 mass% in the aluminum alloy molten metal. Further, crushed objects 12A having no visually peculiar part were not introduced into the melting furnace.

By casting the aluminum alloy molten metal, a silicon-containing aluminum alloy ingot (silicon-containing aluminum alloy ingot) was obtained.

### <Example 3>

A silicon mass obtained by subjecting silica to a deoxidization treatment (phosphorus content rate was the same phosphorus content rate as the silicon mass used in Example 1) which was heated and melted was poured into a casting mold 10 and naturally cooled to obtain a rectangular shaped silicon ingot 11 (Fig. 3).

Next, as shown in Fig. 3, the rectangular shaped silicon ingot 11 was taken out from the casting mold 10 and the silicon mass was crushed to obtain a plurality of crushed objects 12. The size of the crushed object was 10 cm in average major axis length. Then, by visually observing the surfaces of these plurality of crushed objects, they were classified into crushed objects 12A in which parts not having a metallic luster (visually peculiar parts) do not exist (the entire surface has a metallic luster) and crushed objects 12B in which parts not having a metallic luster (visually peculiar parts) exist (see Fig. 3).

Next, the selected plurality of crushed objects 12B were subjected to a water-rinsing treatment for immersing them in water 13 of 60°C for 30 minutes (see Fig. 3). Next, after removing the adhered water from the taken-out crushed objects 12B by drying, these crushed objects 12B were introduced into a melting furnace and the selected crushed objects 12A were introduced into the melting furnace as well (see Fig. 3). Further, an aluminum ground metal having an aluminum content rate of 99.7 mass%, a copper ground metal having a copper content rate of 99.9 mass%, and a magnesium ground metal having a magnesium content rate of 99.9 mass% were introduced into the melting furnace and heated to 850 °C to produce an aluminum alloy molten metal. Each of the aforementioned materials was introduced so that the silicon content rate became 11 mass%, the copper content rate became 4 mass%, the magnesium content rate became 0.5 mass%, and the aluminum content rate became 84.5 mass% in the aluminum alloy molten metal.

By casting the aluminum alloy molten metal, a silicon-containing aluminum alloy ingot (silicon-containing aluminum alloy ingot) was obtained.

### <Comparative Example 1>

A silicon mass obtained by subjecting silica to a deoxidization treatment (phosphorus content rate was the same phosphorus content rate as the silicon mass used in Example 1) which was heated and melted was poured into a casting mold and naturally cooled. By this natural cooling, the solidification of the molten silicon progressed from the vicinity of the outer peripheral frame section of the casting mold and the solidification was completed on the upper exposed surface.

Next, the rectangular shaped silicon ingot was taken out from the casting mold, and a plurality of crushed objects obtained by crushing the silicon ingot were introduced into a melting furnace without being selected. Further, an aluminum ground metal having an aluminum content rate of 99.7 mass%, a copper ground metal having a copper content rate of 99.9 mass%, and a magnesium ground metal having a magnesium content rate of 99.9 mass% were introduced into the melting furnace and heated to 850 °C to produce an aluminum alloy molten metal. Each of the aforementioned materials was introduced so that the silicon content rate became 11 mass%, the copper content rate became 4 mass%, the magnesium content rate became 0.5 mass%, and the aluminum content rate became 84.5 mass% in the aluminum alloy molten metal. The size of the crushed object was 10 cm in average major axis length.

By casting the aluminum alloy molten metal, a silicon-containing aluminum alloy ingot (silicon-containing aluminum alloy ingot) was obtained.

**[Table 1]**

| | Selection | Details of the crushed object introduced to melting furnace | Content rate of phosphorus in silicon-containing aluminum alloy ingot (ppm) |
|---|---|---|---|
| Example 1 | Yes | selected crushed objects not having visually peculiar parts were introduced | 3 |
| Example 2 | Yes | selected crushed objects having visually peculiar parts and water-rinsed were introduced | 4 |
| Example 3 | Yes | Both selected crushed objects not having visually peculiar parts and selected crushed objects having visually peculiar parts and water-rinsed were introduced | 3 |
| Comparative Example 1 | No | All crushed objects were introduced as they are without selection | 25 |

### <Example 4>

A silicon mass obtained by subjecting a silica to a deoxidization treatment which was heated and melted was poured into a casting mold 10 and naturally cooled to obtain a rectangular shaped silicon ingot 11 (see Fig. 2). In the silicon ingot, the content rate of each component was Si > 99.0 mass%, Fe ≦ 0.4 mass%, Al ≦ 0.4 mass%, Ca ≦ 0.1 mass%.

Next, as shown in Fig. 2, the rectangular shaped silicon ingot 11 was taken out from the casting mold 10 and the silicon mass was crushed to obtain a plurality of crushed objects 12. The size of the crushed object was 10 cm in average major axis length. Then, by visually observing the surfaces of these plurality of crushed objects, they are classified into crushed objects 12A in which parts not having a metallic luster (visually peculiar parts) do not exist(the entire surface has a metallic luster) and crushed objects 12B in which parts not having a metallic luster (visually peculiar parts) exist.

Thereafter, the selected plurality of crushed objects 12B was subjected to a water-rinsing treatment in which they were immersed in water 13 of 40°C for 30 minutes (see Fig. 2). Next, after removing the adhered water from the taken-out crushed objects by drying, these crushed objects were introduced into a melting furnace, and an aluminum ground metal having an aluminum content rate of 99.7 mass%, a copper ground metal having a copper content rate of 99.9 mass%, and a magnesium ground metal having a magnesium content rate of 99. 9 mass% were further introduced into the melting furnace and heated to 850°C to produce an aluminum alloy molten metal. Each of the aforementioned materials was introduced so that the silicon content rate became 11 mass%, the copper content rate became 4.3 mass%, the magnesium content rate became 0.55 mass%, and the aluminum content rate became 84 mass% in the aluminum alloy molten metal. Further, crushed objects 12A having no visually peculiar parts were not introduced into the melting furnace.

By casting the aluminum alloy molten metal, a silicon-containing aluminum alloy round bar billet having an outer diameter of 82 mm (silicon-containing aluminum alloy ingot) was obtained.

### <Example 5>

As a silicon ingot, except that a silicon ingot in which the content rate of each component was Si > 98.5 mass%, Fe ≦ 0.5 mass%, Al ≦ 0.5 mass%, Ca ≦ 0.3 mass% was employed, a silicon-containing aluminum alloy round bar billet (silicon-containing aluminum alloy ingot) having an outer diameter of 82 mm was obtained in a similar manner as Example 4.

Further, the content rate of phosphorus as an impurity is higher in the silicon ingot employed in Example 5 than the silicon ingot employed in Example 4.

**[Table 2]**

| | Analysis value of components of obtained billet (cast product) (mass%) | | | | | | | |
|---|---|---|---|---|---|---|---|---|
| | Si | Fe | Cu | Mg | Ti | Ca | P | (Al and inevitable impurities) |
| Example 4 | 11.1 | 0.14 | 4.3 | 0.55 | 0.009 | 0.003 | 0.0003 | Balance |
| Example 5 | 11.0 | 0.16 | 4.3 | 0.57 | 0.012 | 0.006 | 0.0003 | Balance |

For each of the silicon-containing aluminum alloy ingots obtained in the aforementioned manner, the content rate of phosphorus was measured based on the following measuring method. The measurement results are shown in Tables 1 and 2.

### <Method of Measuring Content Rate of Phosphorus>

The quantitative analysis of phosphorus (P) in the silicon-containing aluminum alloy ingot was performed using an emission analyzing device ("PDA 5500 II" made by Shimadzu Corporation). Further, for the aluminum ingots in Examples 4 and 5, the quantitative analysis of Si, Fe, Cu, Mg, Ti, and Ca was performed using the emission analyzing device.

As it is clear from Table 1, in the silicon-containing aluminum alloy ingots of Examples 1 to 3 produced using the production method of the present invention, the content rate of phosphorus was sufficiently suppressed to low levels.

On the other hand, in the silicon-containing aluminum alloy ingot of Comparative Example 1 produced without using the production method of the present invention, the content rate of phosphorus was 25 ppm and the content rate of phosphorus was high.

Further, in Examples 4 and 5, a silicon ingot in which the content rate of trace elements such as P, Fe, Ti and Ca differ from each other was used, but the obtained silicon-containing aluminum alloy ingot had a content rate of phosphorus of 3 ppm, and therefore, it can be understood that, even if the grades of silicon ingot are different, the content rate of phosphorus can be controlled to be 5 ppm or lower.

### INDUSTRIAL APPLICABILITY

Since the content rate of phosphorus as an impurity is suppressed to low levels in a silicon-containing aluminum alloy ingot produced by the production method of the present invention, it can be suitably used as, for example,
1) products or parts in which, when the content rate of phosphorus as an impurity is high, an aggregated portion of phosphorus is at a risk of becoming a source of cracks when external stress is applied (specifically, for example, automobile cast parts, etc.)
2) material produced through a step accompanied by a chemical reaction by chemical etching, etc., and products or parts obtained by processing while applying external stress (rolling, extrusion, forging, etc.) (specifically, for example, foil for electrolytic capacitors, sheet material, automobile parts, etc.), but it is not especially limited to these exemplified applications.

The present invention claims priority to Japanese Patent Application No. 2012-269240 filed on December 10, 2012, the entire disclosure of which is incorporated herein by reference in its entirety.

The terms and descriptions used herein are used only for explanatory purposes and the present invention is not limited to them. The present invention allows various design-changes falling within the claimed scope of the present invention unless it deviates from the spirits of the invention.

### DESCRIPTION OF THE REFERENCE NUMERALS

- 11: silicon ingot (silicon mass)
- 12: crushed object (silicon mass)
- 12A: crushed object not having a visually peculiar part (silicon mass)
- 12B: crushed object having a visually peculiar part (silicon mass)
- 13: water
- 20: visually peculiar part
- 30: selection device
- 31: first conveyance means
- 32: first selection means
- 33: first judgment means
- 34: first classification means
- 41: second conveyance means
- 42: second selection means
- 43: second judgment means
- 44: second classification means

## Claims

1. A method of producing a silicon-containing aluminum alloy ingot, comprising:
a selection step for selecting, among a plurality of silicon masses containing phosphorus as an impurity, a silicon mass not recognized to have a visually peculiar part formed by aggregation of phosphorus on a surface thereof by using a selection means;
a molten metal formation step for obtaining molten metal by introducing, into a melting furnace, an alloy material including at least an aluminum material and a silicon mass selected in the selection step and not having the visually peculiar part, and melting the alloy material; and
a casting step for obtaining a silicon-containing aluminum alloy ingot by casting the obtained molten metal.

2. A method of producing a silicon-containing aluminum alloy ingot, comprising:
a selection step for selecting, among a plurality of silicon masses containing phosphorus as an impurity, a silicon mass recognized to have a visually peculiar part formed by aggregation of phosphorus on a surface thereof by using a selection means;
a water-rinsing step for subjecting the silicon mass selected in the selection step and having the visually peculiar part to a water-rinsing treatment;
a molten metal formation step for obtaining molten metal by introducing an alloy material including at least an aluminum material and the silicon mass obtained through the water-rinsing step into a melting furnace and melting the alloy material; and
a casting step for obtaining a silicon-containing aluminum alloy ingot by casting the obtained molten metal.

3. A method of producing a silicon-containing aluminum alloy ingot, comprising:
a selection step for selecting, among a plurality of silicon masses containing phosphorus as an impurity, a silicon mass recognized to have a visually peculiar part formed by aggregation of phosphorus on a surface thereof by using a selection means;
a water-rinsing step for subjecting the silicon mass selected in the selection step and having the visually peculiar part to a water-rinsing treatment;
a molten metal formation step for obtaining molten metal by introducing an alloy material including an aluminum material, the silicon mass obtained through the water-rinsing step, and a silicon mass not selected in the selection step and not subjected to a water-rinsing treatment into a melting furnace; and
a casting step for obtaining a silicon-containing aluminum alloy ingot by casting the obtained molten metal.

4. The method of producing a silicon-containing aluminum alloy ingot as recited in any one of claims 1 to 3, wherein a part of the silicon mass that the selection means recognizes as the visually peculiar part in the selection step is a part of a surface of the silicon mass not having a metallic luster, a granular concave-convex portion of a surface of the silicon mass, or a portion in which a color of a surface of the silicon mass is white, grayish white, or greenish gray.

5. The method of producing a silicon-containing aluminum alloy ingot as recited in any one of claims 1 to 4, wherein the selection means judges an existence or non-existence of the visually peculiar part in each silicon mass using an optical method and selects a silicon mass based on a judgment result.

6. The method of producing a silicon-containing aluminum alloy ingot as recited in any one of claims 1 to 3, wherein the selection means measures a reflection rate of a light reflected by the silicon mass when a light is irradiated on the silicon mass, and selects a silicon mass based on data of the reflection rate.

7. The method of producing the silicon-containing aluminum alloy ingot as recited in any one of claims 1 to 3, wherein the selection means measures a rate of absorption of a light absorbed by the silicon mass when a light is irradiated on the silicon mass, and selects a silicon mass based on data of the rate of absorption.

8. The method of producing a silicon-containing aluminum alloy ingot as recited in any one of claims 1 to 4, wherein the selection means judges an existence or non-existence of the visually peculiar part by human eyes and selects a silicon mass based on a judgment result.

9. A method of producing a silicon-containing aluminum alloy ingot, comprising:
a molten metal formation step for obtaining molten metal by introducing, into a melting furnace, an alloy material including at least an aluminum material and a silicon mass not having a visually peculiar part formed by aggregation of phosphorus on the surface thereof; and
a casting step for obtaining a silicon-containing aluminum alloy ingot by casting the obtained molten metal.

10. A method of producing a silicon-containing aluminum alloy ingot, comprising:
a molten metal formation step for obtaining molten metal by introducing, into a melting furnace, an alloy material including at least an aluminum material and a silicon mass having a visually peculiar part formed by aggregation of phosphorus on a surface thereof and subjected to water-rinsing; and
a casting step for obtaining a silicon-containing aluminum alloy ingot by casting the obtained molten metal.

11. A method of producing a silicon-containing aluminum alloy ingot, comprising:
a molten metal formation step for obtaining molten metal by introducing, into a melting furnace, an alloy material including at least an aluminum material, a silicon mass not having a visually peculiar part formed by aggregation of phosphorus on a surface thereof and a silicon mass having a visually peculiar part formed by aggregation of phosphorus on a surface thereof and subjected to water-rinsing; and
a casting step for obtaining a silicon-containing aluminum alloy ingot by casting the obtained molten metal.

12. The method of producing a silicon-containing aluminum alloy ingot as recited in any one of claims 1 to 11, wherein a content rate of phosphorus in the silicon-containing aluminum alloy ingot obtained by the casting process is 5 ppm or less.

13. A selection device, comprising:
a conveyance means for conveying a silicon mass,
a judgment means for judging an existence or non-existence of a visually peculiar part on a surface of the silicon mass which is being conveyed by the conveyance means; and
a classification means for classifying a silicon mass judged to have a visually peculiar part by the judgment means and a silicon mass judged to not have a visually peculiar part by the judgment means.

14. The selection device as recited in claim 13, wherein the selection means judges a part of the silicon mass not having a metallic luster, a granular concave-convex part on a surface of the silicon mass, or a part whose color of a surface of the silicon mass is white, grayish white, or greenish gray, as the visually peculiar part.

15. The selection device as recited in claim 13 or 14, wherein the judgment means judges an existence or non-existence of the visually peculiar part on each silicon mass by an optical method.

16. The selection device as recited in any one of claims 13 to 15, wherein the judgment means has a configuration including a CCD camera.

17. The selection device as recited in any one of claims 13 to 16, wherein the classification means is arranged on a front side of the conveyance means in a conveyance direction, and, based on an instruction given by the judgment means based on a judgment result of each silicon mass in the judgment means, performs a horizontal movement moving closer to or farther from the conveyance means.
